# EUROPÄISCHE PATENTSCHRIFT

(11) **EP 0 558 904 B1**
(45) Veröffentlichungstag und Bekanntmachung des Hinweises auf die Patenterteilung: **22.11.1995**
(21) Anmeldenummer: 93100983.1
(22) Anmeldetag: 22.01.1993
(51) Int. Cl.: B64C 21/02

(54) **Tragflügel für Luftfahrzeuge mit überkritischer Profilierung**
Aircraft wing with supercritical profile
Aile pour avion avec profile supercritique

(30) Priorität: 06.03.1992 DE 4207103
(43) Veröffentlichungstag der Anmeldung: 08.09.1993
(73) Patentinhaber: Daimler-Benz Aerospace Airbus Gesellschaft mit beschränkter Haftung, 21129 Hamburg (DE)
(72) Erfinder: Bohning, Rainer, Prof. Dr., W-7500 Karlsruhe 1 (DE)
(74) Vertreter: Hansmann, Dierk, Dipl.-Ing.

(56) Entgegenhaltungen:
- FR-A- 929 942
- FR-A- 2 489 244
- GB-A- 2 187 261
- US-A- 4 522 360

## Beschreibung

Die Erfindung bezieht sich auf einen Tragflügel für Luftfahrzeuge mit überkritischer Profilierung, welcher an seiner Oberseite eine in Richtung der Spannweite verlaufende Ventilationsvorrichtung zur Beeinflussung der Grenzschicht im Bereich des Verdichtungsstoßes aufweist, die aus einer mit einem perforierten Wandstreifen abgedeckten und zu beiden Seiten des Verdichtungsstoßes sich erstreckenden Ausgleichskammer besteht.

Ein derartiger Tragflügel ist in der DE-C-33 18 413 ausführlich beschrieben. Wie in dieser Druckschrift angegeben, stellt sich bei einer transsonischen Umströmung solcher Tragflügel auf der Oberseite im Bereich des Dickenmaximums ein lokales Überschallgebiet ein und für einen bestimmten Auslegungszustand kann der Übergang vom Überschall zum Unterschall nahezu stoßfrei durch geeignete Profilierung realisiert werden. Bei geringfügigen Änderungen der Anströmbedingungen (sog. "Off-design Bereich") wird das Überschallgebiet aber in der Regel durch einen Verdichtungsstoß stromabwärts abgeschlossen, welcher eine beträchtliche Widerstandsquelle darstellt. Aufgrund der Wechselwirkung des Stoßes mit der wandnahen Reibungsgrenzschicht kann es je nach Stoßstärke zur Strömungsablösung und als Folge davon zum höchst unerwünschten Tragflügelschütteln kommen.

Durch Beeinflussung des Stoß-Grenzschicht-Interferenzgebietes ist es möglich diesen negativen Auswirkungen auf einfache Weise passiv entgegenwirken. Man versteht unter dieser Methode ein sich selbstregulierendes Ausblasen und Absaugen von Strömungsmedium durch ein poröses Wandstück im Stoßbereich mit darunterliegender Ausgleichskammer. Ein Druckanstieg über den Stoß hinweg induziert hierbei eine Ventilationsströmung durch die poröse Oberfläche, wobei ein Teil der Grenzschicht hinter dem Stoß abgesaugt und vor dem Stoß wieder ausgeblasen wird. Durch Rückkopplung mit der Außenströmung kommt es bei geeigneter Lage und Breite der Ausgleichskammer zu einer günstigen Beeinflussung der Stoß-Grenzschicht-Interferenz und damit zu einer Verbesserung der Profileigenschaften. Der Durchlaß durch die Wand kann, wie in der DE-C-33 18 413 vorgeschlagen, durch eine Perforation mit senkrechten oder schrägen Bohrungen erfolgen. Diese Methode zielt auf eine Reduktion des Wellenwiderstandes bei möglichst geringem Anstieg des viskosen Widerstandes ab.

Eine weitere Ventilationsvorrichtung zur Milderung von Schütteln und Energieverlusten durch Beeinflussung der Grenzschicht eines aerodynamischen Profils ist dem Dokument GB-A-2 187 261 zu entnehmen. Bei diesem überkritischen Profil wird ein Verdichtungsstoß gemildert bzw. weiter stromab verlagert, indem Ventilationsmedium infolge des wirksamen Druckgefälles durch eine Vielzahl von Röhrchen aus dem Bereich hinter dem Stoß in den stromaufwärts gelegenen Bereich vor dem Stoß abfließt und dort ausgeblasen wird. Das Ausblasen des Ventilationsmediums in die Hauptströmung erfolgt dabei durch vertikale oder nach hinten geneigte Austrittsöffnungen, so daß stets eine Winkeldifferenz zwischen der Ausblasströmung und der Hauptströmung besteht. Dabei wird aufgrund der Hauptströmung eine Umlenkung der Ausblasströmung durch Strahlumlenkung in tangentiale Richtung erzwungen, was jedoch nur unter Impulsverlust möglich ist.

Die Erfindung geht von einem überkritischen Tragflügel mit einer auf der Oberseite angeordneten in Spannweitenrichtung verlaufenden passiven Ventilationsvorrichtung zum Absaugen und Ausblasen von Grenzschichtmaterial aus und hat die Aufgabe, den Ausblas-Impuls möglichst verlustarm in die Hauptströmung einzuleiten. Diese Aufgabe wird erfindungsgemäß dadurch gelöst, daß das vordere Ende der Ausgleichskammer einen in Richtung der Hauptströmung ausgerichteten spaltförmigen Austritt zum Ausblasen des Ventilationsmediums aufweist.

Bei der erfindungsgemäßen Ventilationsvorrichtung wird das Ventilationsmedium vor dem Stoß tangential zur Wand in Strömungsrichtung ausgeblasen, was sich mit einfachen technischen Mitteln verwirklichen läßt. Die Ventilationsvorrichtung besteht aus einer Kombination von Spalt und stromabwärts angebrachtem perforierten Wandstreifen mit darunterliegender Ausgleichskammer, die beide Elemente verbindet. Spalt und Wandstreifen erstrecken sich in Flügelspannweite. Zwischen dem Unterschallfeld und dem Überschallfeld wird daher eine sich selbstregulierende Ausgleichsströmung angeregt, wobei ein Teil des Grenzschichtmediums hinter dem Stoß abgesaugt und in einiger Entfernung vor dem Stoß durch einen Spalt der ankommenden Grenzschicht tangential zugeleitet wird. Dadurch wird in der Folge der Stoß zum hinteren Kammerende verschoben und dort fixiert. Die Zufuhr von kinetischer Energie durch den Spalt wirkt sich hierbei positiv auf den Charakter der Grenzschicht aus. Dabei werden die Impulsverlustdicke und die Verdrängungsdicke deutlich reduziert und die Wandschubspannung erhöht. Das Geschwindigkeitsprofil wird, besonders in Wandnähe, beträchtlich völliger, wodurch der Tendenz der sonst auftretenden stoßinduzierten Ablösung entsprechend entgegengewirkt wird. Da das tangentiale Ausblasen im Gegensatz zum vertikalen oder schrägen Ausblasen keinen zusätzlichen Impulsverlust induziert, kann ein höherer Massenstrom durch die Ausgleichskammer zugelassen werden, was den Ventilationseffekt verstärkt.

Für den überkritischen Flügel ergibt sich bei geeigneter Ausgestaltung der Ventilationsvorrichtung insgesamt eine Widerstandsverringerung im "Off-design" Bereich. Zusätzlich kommt es zu einer beträchtlichen Erhöhung des Auftriebs. Die Reduzierung des Gesamtwiderstandes basiert hier auf der durch das tangentiale Ausblasen hervorgerufenen starken Absenkung des viskosen Widerstandes. Der Auftriebsgewinn resultiert aus der Verschiebung des Stoßes stromabwärts.

Durch die Verringerung des Gesamtwiderstandes und gleichzeitige Erhöhung des Auftriebs werden die Flugleistungen unter Off-design Bedingungen nicht nur verbessert, sondern es wird der Off-design Bereich selbst erweitert, da der Beginn des Tragflügelschüttelns zu höheren Auftriebswerten verschoben wird. Gegenüber aktiven Methoden zur Stoßbeeinflussung bietet die hier vorgeschlagene Methode den Vorteil, ohne energieverbrauchende Maßnahmen auszukommen.

Die vorgeschlagene Methode ist nicht nur für transsonische Tragflügel von Nutzen, sondern sie läßt sich prinzipiell überall dort einsetzen, wo Verdichtungsstöße mit Grenzschichten interferieren. Dabei ist es auch möglich, bei Bedarf den Spalt zu verschließen und die Strömung durch die Perforation mit Hilfe einer Blende auf der Innenseite des Wandstreifens zu unterbinden.

Die Erfindung wird anhand der Zeichnung näher erläutert. Es zeigen:
- Fig. 1: eine Draufsicht auf einen Ausschnitt eines Luftfahrzeuges mit einem transsonischen Tragflügel,
- Fig. 2: einen Querschnitt durch den transsonischen Flügel gemäß Fig. 1,
- Fig. 3: ein Stoß-Grenzschicht-Interferenzgebiet mit Ventilationsvorrichtung,
- Fig. 4a: ein Isotachenfeld für einen Tragflügel ohne Ventilation,
- Fig. 4b: ein Isotachenfeld für einen Tragflügel mit Ventilation, tangentialem Ausblasen und wandnormalem Absaugen,
- Fig. 5: berechnete Druckverläufe am Grenzschichtrand gemäß Fig. 4a, b,
- Fig. 6: berechnete Verdrängungsdicken und Impulsverlustdicken gemäß Fig. 4a, b,
- Fig. 7: berechnete Reibungsbeiwerte gemäß Fig. 4a, b und
- Fig. 8: Diagramme für Auftrieb, Gesamtwiderstand, Wellenwiderstand und viskosen Widerstand.

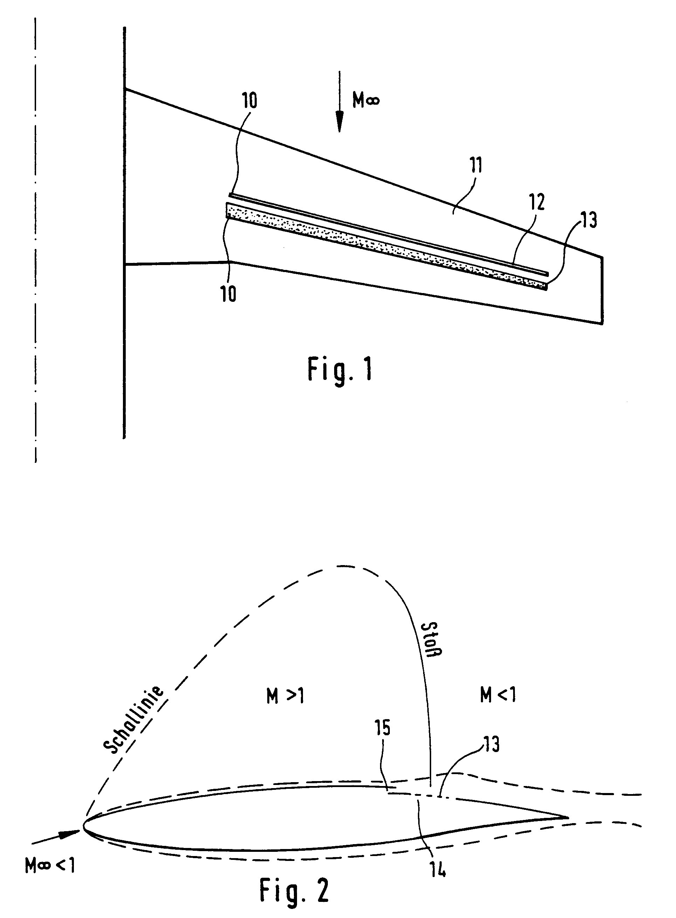

In Fig. 1 ist eine Draufsicht auf einen mit einer überkritischen Machzahl M∞ angeströmten Tragflügel 11 mit perforiertem Wandstreifen 13 und vorgelagertem Spaltblech 12 abgebildet. Wandstreifen 13 und Spaltblech 12 sind so angebracht, daß der Verdichtungsstoß im nichtventilierten Fall etwa über der Mitte des Wandstreifens 13 stehen würde, d.h. bei modernen Tragflügeln 11 bei ca. 50 - 70 % der Flügeltiefe. Bei optimaler Lage der Ventilationsanordnung 10 ergibt sich so ein positiver Ventilationseffekt im gesamten Offdesign Bereich. Wie die Zeichnung zeigt, erstreckt sich die Ventilationsvorrichtung 10 nicht über die gesamte Flügelspannweite. Die darunter befindliche Ausgleichskammer 14 ist in Spannweitenrichtung in geeigneter Weise unterteilt, um einen Druckausgleich in dieser Richtung zu vermeiden. Die Perforation des Wandstreifens 13 kann eine hexagonale Lochanordnung aufweisen mit einer Durchlässigkeit von 4 - 20 %.

Fig. 2 zeigt einen Schnitt durch den Flügel 11 in Strömungsrichtung. An der Oberseite dieses Profils ist ein lokales überschallgebiet mit abschließendem Verdichtungsstoß zu erkennen. Im Stoßbereich des Tragflügels 11 ist in die Wand die Ausgleichskammer 14 eingelassen, deren Höhe von untergeordneter Bedeutung da die Ventilation nur einen relativ geringen Massenstrom durch die Kammer 14 induziert. Die Höhe ist hier nicht maßstäblich dargestellt. Sie kann in der Praxis ca. 2 Grenzschichtdicken betragen. Die Länge der Ausgleichskammer 14 bzw. der Abstand zwischen Spalt 15 und stromabwärts liegendem Kammerende kann 5 - 20 % der Profiltiefe betragen.

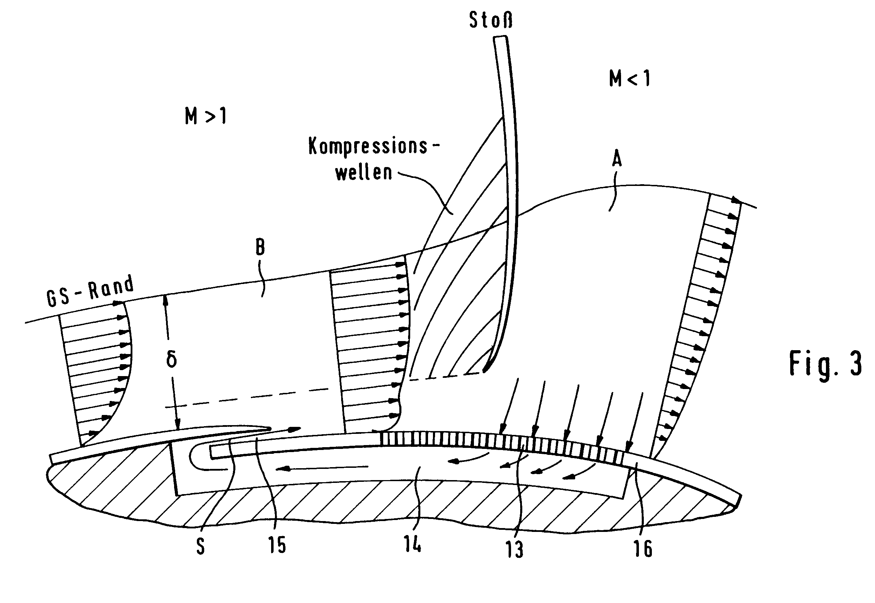

Fig. 3 verdeutlicht schematisch die wesentlichen Details der Ventilationsvorrichtung 10. Die Ausgleichskammer 14 ist mit einem Wandstreifen 13 abgedeckt, der teilweise oder auf der ganzen Länge perforiert ist. In beiden Fällen ist jeweils der hintere, stromabwärts vom Stoß liegende, Bereich bis zum Kammerende 16 perforiert. Stromaufwärts kann sich die Perforation bis zu einigen Grenzschichtdicken vor den Stoß oder sogar bis in den Spalt 15 erstrecken. Das Strömungsmedium gelangt aus Gebieten höheren Druckes (A) durch die Perforation in die Ausgleichskammer 14 und strömt zum größten Teil aus dem Spalt 15 in Gebiete niederen Druckes (B). Ein Teil des Mediums kann je nach Durchlässigkeit der Wand 13 auch schon zwischen Stoß und Spalt ausströmen. In diesem Fall kommt es zu einer Vermischung des tangential und vertikal ausströmenden Mediums. Diese Version stellt somit eine Kombination der hier vorgeschlagenen und der in DE 33 18 413 vorgeschlagenen Methode dar. Bei der Gestaltung der Kante am Ausgang des Spaltes 15 ist Sorgfalt geboten, damit die Grenzschicht nicht durch hier eventuell induzierte Ablösewirbel belastet wird.

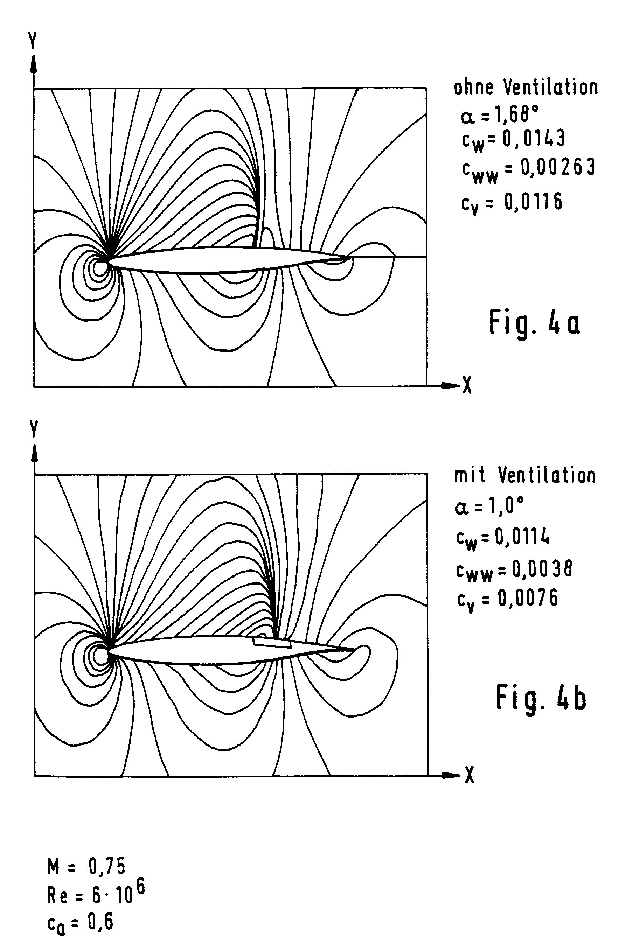

Die Darstellungen nach Fig. 4 bis Fig. 8 beziehen sich auf eine numerische Simulation der Umströmung eines bestimmten überkritischen Tragflügelprofils. Dabei werden jeweils die Fälle a) ohne Ventilationsvorrichtung den Fällen b) mit Ventilationsvorrichtung gegenübergestellt.

Bei dem verwendeten Profil handelt es sich um das Profil LVA-1A bei einer Anströmmachzahl von M∞ = 0,75 und einer Reynoldszahl von Re = 6 · 10⁶. Der Auftriebsbeiwert Cₐ beträgt bei den Darstellungen nach Fig. 4 bis Fig. 7 jeweils 0,6.

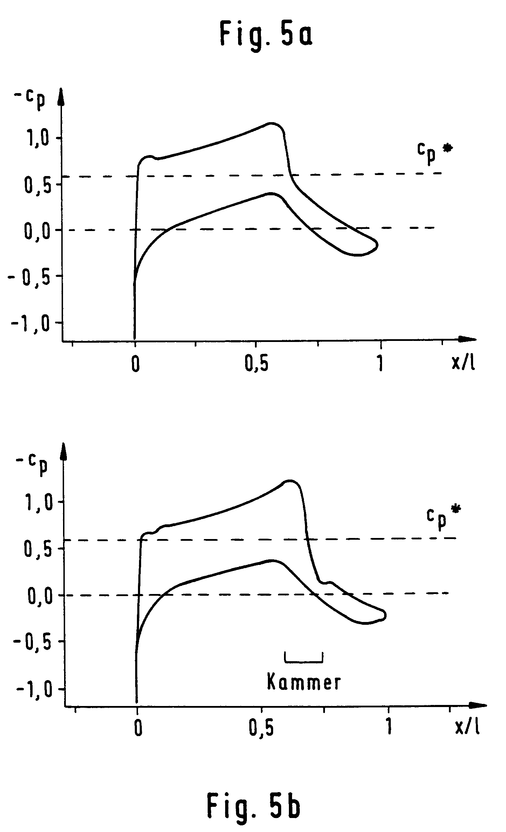

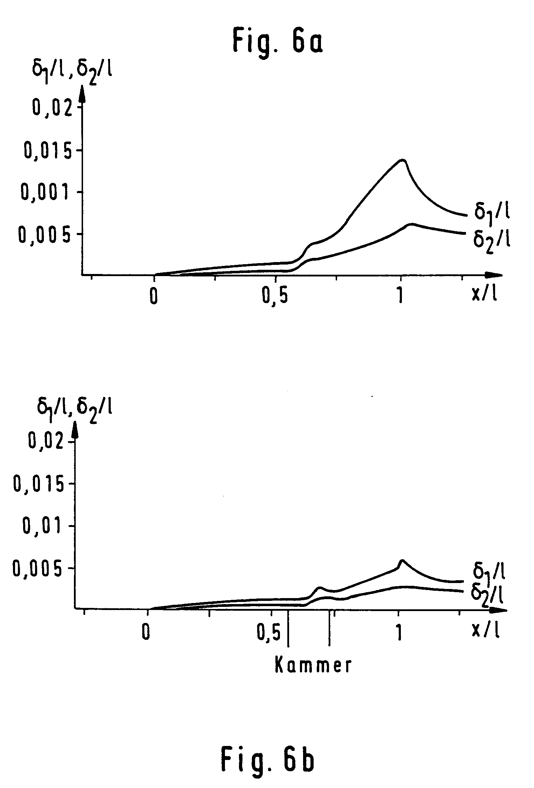

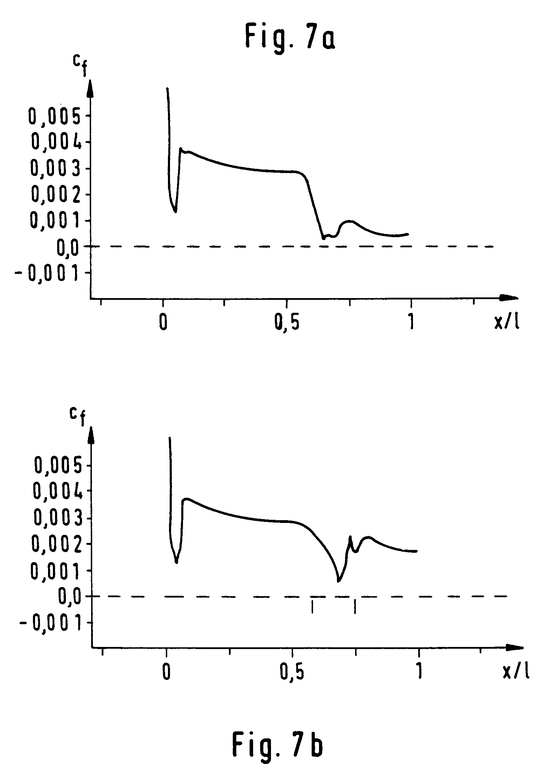

Fig. 4 zeigt berechnete Isotachenfelder und Fig. 5 die zugehörigen Wanddruckverläufe. Ein Vergleich der Fälle a) und b) zeigt, daß der Stoß stromabwärts in die Nähe des Kammerendes verschoben wird (Fig. 5b), während der Anstellwinkel bei gleichem Auftriebsbeiwert auf 1^{o} abnimmt. Daraus ist zu schließen, daß bei konstant gehaltenem Anstellwinkel im Fall b) ein beträchtlicher Auftriebsgewinn gegenüber dem nichtventilierten Fall erzielt werden kann. Den Diagrammen für die Verdrängungsdicke und die Impulsverlustdicke (Fig. 6) kann entnommen werden, daß beide Grenzschichtgrößen bei Ventilation drastisch reduziert werden. Aus der Verringerung der Impulsverlustdicke resultiert der geringere viskose Widerstand. Der Verlauf des Reibungsbeiwertes c_{f} (Fig. 7) deutet auf eine wesentlich geringere Tendenz zur Ablösung gegenüber dem nichtventilierten Fall hin.

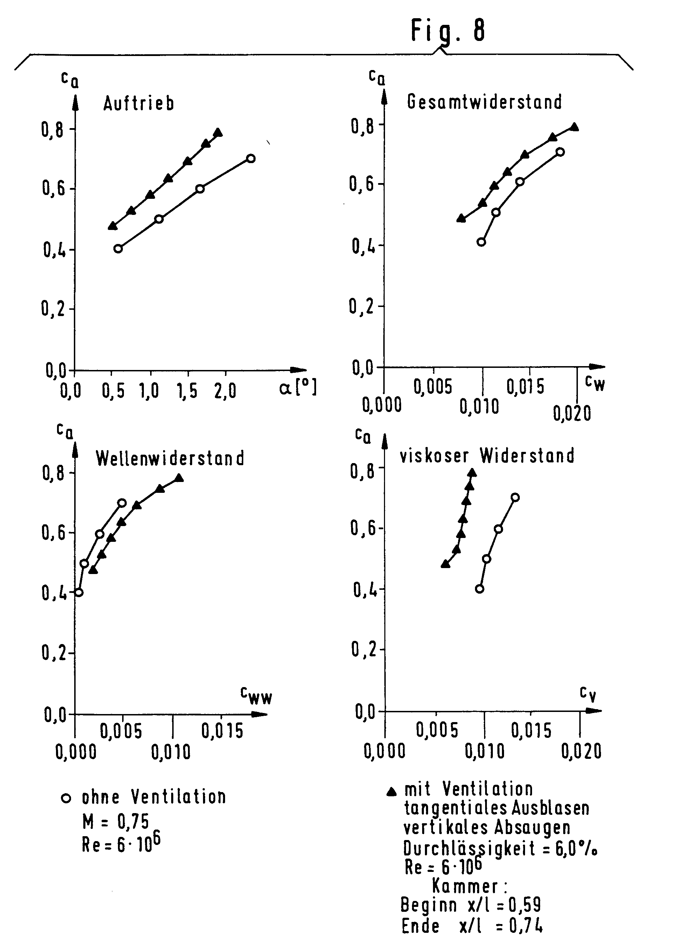

Die Diagramme in Fig. 8 zeigen die Polaren für den Auftrieb, Gesamtwiderstand, Wellenwiderstand und viskosen Widerstand. Es wird ersichtlich, daß bei Profilen mit erfindungsgemäßer Ventilationsvorrichtung der viskose Widerstand drastisch verringert wird, während der Wellenwiderstand zwar zunimmt, aber die Summe aus beiden Widertänden, und zwar der Gesamtwiderstand, deutlich abnimmt. Darüber hinaus führt die Ventilation mit tangentialem Ausblasen zu einem beträchtlichen Auftriebsgewinn.

## Patentansprüche

1. Tragflügel für Luftfahrzeuge mit überkritischer Profilierung, welcher an seiner Oberseite eine in Richtung der Spannweite verlaufende Ventilationsvorrichtung zur Beeinflussung der Grenzschicht im Bereich des Verdichtungsstoßes aufweist, die aus einer mit einem perforierten Wandstreifen abgedeckten und zu beiden Seiten des Verdichtungsstoßes sich erstreckenden Ausgleichskammer besteht,
**dadurch gekennzeichnet**, daß das vordere Ende der Ausgleichskammer (14) einen in Richtung der Hauptströmung ausgerichteten spaltförmigen Austritt (15) zum Ausblasen des Ventilationsmediums aufweist.

2. Tragflügel nach Anspruch 1, dadurch gekennzeichnet, daß der spaltförmige Austritt (15) zum stromabwärts liegendem Ende (16) des perforierten Wandstreifens (13) einen Abstand aufweist, der auf einen Wert von 5 % bis 20 % der örtlichen Flügeltiefe bemessen ist, und daß die Mitte dieses Abstandes zwischen 50 % und 70 % der örtlichen Flügeltiefe (Stoßlage) auf der Flügeloberseite angeordnet ist.

3. Tragflügel nach einem der Ansprüche 1 oder 2, dadurch gekennzeichnet, daß die aus spaltförmigem Austritt (15) perforiertem Wandstreifen (13) und Ausgleichskammer (14) bestehende Ventilationsvorrichtung (10) sich nur über einen Teil der Flügelspannweite erstreckt.

4. Tragflügel nach einem der Ansprüche 1 bis 3, dadurch gekennzeichnet, daß die Ausgleichskammer (14) mit spaltförmigem Austritt (15) und Ventilationseinrichtung (10) in Richtung der Flügelspannweite durch Zwischenwände unterteilt ist.

5. Tragflügel nach einem der Ansprüche 1 bis 4, dadurch gekennzeichnet, daß der spaltförmige Austritt (15) in seiner Höhe und die Perforation des Wandstreifens (13) durch auf der Innenseite vorgesehene Blenden veränderbar sind.

6. Tragflügel nach einem der Ansprüche 1 bis 5, dadurch gekennzeichnet, daß die Ventilationsvorrichtung (10) mit Austrittspalt (15) und perforiertem Wandstreifen (13) an Orten einsetzbar ist, wo Verdichtungsstöße mit Grenzschichten interferieren.

## Claims

1. Wing for aircraft with supercritical contouring, the upper side of which has a ventilation device, extending in the direction of the span, for influencing the boundary layer in the area of the compression shock, which consists of an equalizing chamber which is covered with a perforated wall strip and extends on either side of the compression shock, characterized in that the front end of the equalizing chamber (14) has a slit-type outlet (15), aligned in the direction of the main flow, through which the ventilation medium is blown out.

2. Wing according to Claim 1, characterized in that the slit-type outlet (15) is separated from the downstream end (16) of the perforated wall strip (13) by an interval which is dimensioned to a value of 5% to 20% of the local wing chord and in that the centre of this interval is disposed at between 50% and 70% of the local wing chord (shock position) on the upper side of the wing.

3. Wing according to either of Claims 1 or 2, characterized in that the ventilation device (10) consisting of a slit-type outlet (15), perforated wall strip (13) and equalizing chamber (14) extends over only a part of the wingspan.

4. Wing according to any one of Claims 1 to 3, characterized in that the equalizing chamber (14) with a slit-type outlet (15) and ventilation device (10) is divided by intermediate walls in the direction of the wingspan.

5. Wing according to any one of Claims 1 to 4, characterized in that the height of the slit-type outlet (15) and the perforation of the wall strip (13) can be adjusted by means of shutters on the inside.

6. Wing according to any one of Claims 1 to 5, characterized in that the ventilation device (10) with an outlet slit (15) and perforated wall strip (13) can be used in locations where compression shocks interfere with boundary layers.

## Revendications

1. Aile portante pour avions avec un profilé hypercritique, ladite aile présentant sur sa face supérieure un dispositif de ventilation installé dans le sens de l'envergure et destiné au contrôle de la couche limite dans la zone du choc de compression, ce dispositif de ventilation se composant d'une chambre de compensation recouverte d'une paroi perforée et s'étendant des deux côtés du choc de compression, **caractérisée en ce que** l'extrémité avant de la chambre de compensation (14) présente une sortie (15) en forme de fente dirigée dans le sens du flux principal et destinée à refouler le médium de ventilation.

2. Aile portante selon la revendication 1, caractérisée en ce que la sortie (15) en forme de fente est séparée de l'extrémité (16) en aval de la paroi perforée (13) par une distance correspondant à 5 à 20% de la profondeur d'aile locale et en ce que le centre de cette distance est placé sur la face supérieure de l'aile à un endroit correspondant à une valeur comprise entre 50 et 70% de la profondeur d'aile locale (point d'impact).

3. Aile portante selon l'une ou l'autre des revendications 1 et 2, caractérisée en ce que le dispositif de ventilation (10) composé d'une sortie en forme de fente (15), d'une paroi perforée (13) et d'une chambre de compensation (14) s'étend uniquement sur une partie de l'envergure.

4. Aile portante selon l'une ou l'autre des revendications 1 à 3, caractérisée en ce que la chambre de compensation (14) présentant la sortie en forme de fente (15) et le dispositif de ventilation (10) est subdivisée par des parois intermédiaires dans le sens de l'envergure.

5. Aile portante selon l'une ou l'autre des revendications 1 à 4, caractérisée en ce que la sortie (15) en forme de fente peut être adaptée en hauteur et en ce que la perforation de la paroi (13) peut être modifiée par des écrans prévus sur la face interne.

6. Aile portante selon l'une ou l'autre des revendications 1 à 5, caractérisée en ce que le dispositif de ventilation (10) composé d'une fente de sortie (15) et d'une paroi perforée (13) peut être inséré à l'endroit où les chocs de compression interfèrent avec les couches limites.
